Europäisches Patentamt

European Patent Office

Office européen des brevets

(11) Publication number: **0 422 932 A2**

(12) EUROPEAN PATENT APPLICATION

(21) Application number: 90311132.6

(22) Date of filing: 11.10.90

(51) Int. Cl.⁵: **C09J 195/00**, C09J 153/02, D06N 5/00

(30) Priority: 12.10.89 US 420772

(43) Date of publication of application:
17.04.91 Bulletin 91/16

(84) Designated Contracting States:
AT BE CH DE DK ES FR GB GR IT LI LU NL SE

(71) Applicant: W.R. Grace & Co.-Conn.
1114 Avenue of the Americas
New York New York 10036(US)

(72) Inventor: Belletete, Margaret A.
223A Elm Street
Amesbury, Massachusettes 01913(US)
Inventor: Wiercinski, Robert A.
83 Belmont Street
Somerville, Massachusettes 02143(US)

(74) Representative: Bentham, Stephen et al
J.A. Kemp & Co. 14 South Square Gray's Inn
London, WC1R 5LX(GB)

(54) Non-sagging bituminous adhesive and waterproofing membranes containing same.

(57) Pressure sensitive bituminous adhesives are provided which comprise bitumen, oil, an elastomer, and silica. These adhesives are particularly useful as self adherent waterproofing layers, particularly in roofing applications. The presence of silica increases the sag resistance of the adhesives, preventing adhesive from flowing or dripping from the waterproofing layer at the relatively high temperatures encountered in roofing applications.
Also provided are waterproofing membranes comprising the inventive adhesive compositions.

EP 0 422 932 A2

# NON-SAGGING BITUMINOUS ADHESIVE AND WATERPROOFING MEMBRANES CONTAINING SAME

This invention relates to pressure sensitive bituminous adhesives which are adapted to provide increased resistance to flow at the elevated temperatures often encountered in roofing applications and are also inexpensive to manufacture. The invention also relates to self-adherable waterproofing membranes comprising the adhesive compositions of this invention.

Compositions containing a mixture or blend of a bitumen, oil, and various rubbers have been used as pressure sensitive adhesives in waterproofing applications. (Hereinafter these bitumen-oil-rubber adhesives will be referred to as "bituminous adhesives".) Generally, these bituminous adhesives are capable of being formed into pressure sensitive adhesive layers which can be adhered to a substrate at ambient temperature to provide a waterproofing covering. Although these layers can be self supporting and thus not require a permanently adhered support or carrier, the commercial products employing such layers generally have included a support layer to which one face of the pressure sensitive adhesive layer is adhered. Typical of the support layers which have been used are polymeric sheets, e.g. polyethylene, polypropylene, and polyvinylchloride. Among the more preferred support layers are the biaxially oriented or oriented and cross-laminated polyolefin films disclosed in Canadian Pat. No. 1,008,738.

Membranes comprising a waterproof ing adhesive layer of a bituminous adhesive have been widely used in roofing applications, i.e., as self-adherable roofing membranes applied to a roofdeck substrate, as below grade waterproofing coverings, e.g., in waterproofing concrete foundations, plaza decks, bridge decks, and the like, and in pipe wrapping applications. The bituminous adhesive layer provides a fully adhered waterproof layer which is self sealing and provides excellent waterproof ing protection, this being in addition to the waterproofing protection provided by any support layer which might, be used.

In roofing applications these membranes may be exposed to temperatures as high as 200° F, especially in warm climates. At elevated use temperatures (generally 140° F to 200° F), conventional bituminuous adhesives may sag and drip from the roof. The flow of the adhesive may be reduced by adding a higher level of rubber relative to the other components of the adhesive. However, this increases the cost of the adhesive, raises the viscosity of the mixture which may render processing difficult, and may be detrimental to adhesion.

The present invention is directed to improved bituminous pressure sensitive adhesive compositions comprising bitumen, oil, an elastomer, and silica. It has been found that these compositions can be formulated to prevent the flow of the bituminous adhesive at elevated temperatures such as those which would be encountered in roofing applications. This improvement in the flow properties of the adhesive is accomplished without sacrificing other critical properties such as adhesive strength, low temperature tack, low temperature flexibility, and processability. As such, these adhesives can be used advantageously as self-adherable waterproofing adhesive layers or membranes, particularly in roofing applications where the membrane surface temperature can vary over a wide range, e.g. -20° F up to about 200° F. The adhesives of the invention are particularly advantageous for use in membranes used on sloped roofs, e.g. membranes which are used at edge of a roof for ice dam protection.

In a preferred embodiment, the adhesives of this invention comprise from about 25 to about 60 weight percent of bitumen, about 15 to 40 weight percent of oil, about 5 to 25 weight percent of an elastomer, and from about 1 to 30 weight percent of silica. Preferably the composition also contains an inert filler, and most preferably said filler is calcium carbonate. The filler is generally present in an amount of from 0 to 35 percent. (Unless otherwise stated, all percentages are weight percent based on the total weight of the composition.)

In a still further preferred embodiment of this invention, the silica particles which are used have a surface area of from about 10 to 700 m²/g. A preferred silica is fumed silica having a surface area of from 15 to 400 m²/g, and preferably from 100 to 380 m²/g.

The present invention is further directed to waterproofing membranes comprising the adhesives of this invention. The membrane may comprise the adhesive as an integral, monolithic layer without a support per se, although it may include a reinforcement such as a scrim material partially or fully embedded in the adhesive layer. Preferably, the membranes comprise the adhesive layer and a support layer which is either directly adhered to the adhesive layer or indirectly adhered to the adhesive layer, e.g. through one or more intermediate layers.

As used herein, the term "bitumen" is used in a broad context to refer to the solid or semi-solid residue obtained on the removal of the volatile components from crude oil, either by natural processes or distillation of the crude oil, inclusive of those materials which are commonly referred to as "asphalts" (i.e. naturally occurring or manufactured bitumen or asphalt). Further, for the sake of brevity and convenience, the term "bitumen" is meant also to refer to tars and pitches, these being at least bituminous materials if not "true" bitumens. In general, the adhesives of this invention will utilize the manufactured bitumens or asphalts obtained as crude oil distillation residues.

The present invention relates to pressure sensitive adhesive compositions comprising bitumen, oil, an elastomer, and silica. The silica serves as a thixotropy producing filler, or "thixotrope", in this novel blend. It has been found that the addition of silica to the adhesives of this invention will increase the low shear rate viscosity of the adhesive, even at the relatively high temperatures of roofing applications, without significantly increasing the viscosity at higher shear rates, i.e. the silica renders the compositions thixotropic. The thixotropy of the adhesive prevents flow at elevated temperatures when negligible shear forces are present (e.g. on the surface of a roofing membrane), but allows the material to be mixed using a relatively low amount of energy under conventional processing conditions. Similarly, the thixotropy of the adhesive permits processing into sheets, coatings, and the like under conventional processing conditions.

In contrast to the ability of silica to modify the flow of the compositions of this invention, similar modification has not been possible with other additives. When high levels of elastomer are added to the composition in order to reduce the flow at elevated temperatures, the high-shear viscosity is increased as well as the low-shear viscosity. This increase in the high-shear viscosity makes it necessary to expend more energy in order to mix the composition. This method of decreasing flow is also unsatisfactory because elastomers are expensive relative to the other components of the adhesives, the flow reduction produced in this way may not be adequate, and the other properties of the adhesive may be affected by the formulation change.

The compositions of this invention may comprise the bitumen, oil, elastomer and silica and, optionally, filler, in any suitable ratio as necessary to provide a pressure sensitive adhesive having desired physical properties. Generally, the compositions of this invention comprise about 25% to 60% of bitumen, about 15% to 40% of oil, about 5% to 25% of elastomer, and about 1% to 30% parts by weight of silica. The filler may be present in amounts of up to 35% Particularly preferred compositions are those comprising about 32% to 52% of bitumen, 21% to 37% of oil, 9% to 21% of elastomer, 0% to 11% filler and 3% to 24% of silica.

The preferred level of silica will depend upon the type of silica used, as discussed hereafter. It is generally preferred that the present compositions comprise less than about 30% silica.

Bitumens are commonly classified by penetration grade (ASTM D-5) and Ring and Ball softening point (ASTM D-36). While any bitumen suitable to provide desired physical properties may be used in the present compositions, bitumens which are useful in this invention generally combine a penetration of about 15 to 200 decimillimeters at 75° F, as measured according to the procedure set forth in ASTM D-5, with a Ring and Ball softening point of from 100° F to 230° F, as measured according to the procedure set forth in ASTM D-36.

The oil component of the present composition, as in all bituminous adhesives, serves as a plasticizer for the bitumen, a processing aid, e.g. in facilitating dissolution of the elastomeric component in the bitumen, or as a bitumen modifier, e.g. to increase the tack of the bitumen. Any oil serving one or more of these functions may be employed in the present compositions and, in general, any of the various oils used in prior bituminous adhesives, commonly referred to as "extender oils", can be used in the present compositions. These oils are generally classified as either naphthenic, aromatic, or paraffinic, with the aromatic oils being preferred for use in this invention.

It should be understood that bitumens may include a naturally occurring oil component and that this oil component can vary in type and amount as a function of the source of the bitumen and method of manufacture. The oil component of the present compositions is to be distinguished from these naturally occurring bitumen oils. Thus, the oil component of this invention is a separate additive oil or mixture of additive oils which is incorporated into the bituminous adhesive composition as part of its manufacture and provides one or more of the above described functions. Consistent with this, any quantities or proportions of oil presented herein refer to the quantity of this added ingredient oil only, and are thus exclusive of any naturally occurring oil contained in the bitumen.

As used herein, the term "silica" refers to silicon dioxide particles having a surface area of at least 10 $m^2/g$ and generally less than 700 $m^2/g$. Silicas which are useful in the present invention are fumed silica, precipitated silica and condensed silica fume. Fumed silica is a colloidal form of silica produced by the hydrolysis of silicon tetrachloride vapor in a hydrogen-oxygen flame. This type of silica generally has a very high surface area, typically from 15 to 400 $m^2/g$, and as noted hereinabove a particularly preferred range of surface area for fumed silica is from 100 to 380 $m^2/g$. Fumed silica is generally hydrophilic, but may be treated with a silane to render it hydrophobic. Condensed silica fume is produced as a by-product of the reduction of high-purity quartz with coal in electric arc furnaces in the manufacture of ferrosilicon and silicon metal. Since condensed silica fume is obtained as a by-product, its properties may vary due to variation in the reduction process, and its cost is low relative to fumed silica. Generally the surface area of condensed silica fume is much lower than that of fumed silica, typically from 10 to 100 $m^2/g$, and preferably room 15 to 50 $m^2/g$. Precipitated silica, which is produced in water by a chemical reaction of a soluble silicate and a mineral acid, typically has a surface area of from 45 to 700 $m^2/g$, and preferably from 200 to 675 $m^2/g$.

It has been found that in the compositions of the invention if condensed silica fume is used rather than fumed silica, significantly higher levels of addition are required to obtain equivalent flow properties (e.g. 25% vs. 8%). Since the cost of the condensed silica fume is also significantly less than that of fumed silica, the decision of which to use, or whether to use a blend of the two, may be based on processing equipment and commercial availability. The surface area of precipitated silica is generally similar to that of fumed silica, and thus only slightly higher amounts of precipitated silica are typically required to provide adequate flow resistance. Fumed silica which has been silane-treated to render it hydrophobic has been found to produce superior sag resistance at very low levels of addition (1% to 5%), but it is also the most expensive type of silica. Hence even at low levels of addition its cost may be undesirable. The difference in effective amounts of silica is believed to be based on both the surface area and surface properties (e.g. hydroxide concentration; surface treatments) of the silica used. When fumed silica having a surface area in the preferred range of from 100 to 380 $m^2/g$, is used in the invention the level of addition would typically be from 1% to 10%, and preferably from 3% to 7%. When condensed silica fume having a surface area in the range of from 15 to 50 $m^2/g$ is used, the level of addition would typically be from 15% to 30%, and preferably from 22% to 27%. When precipitated silica having a surface area of from 200 to 675 $m^2/g$ is used, the level of addition is generally from 4% to 15% and preferably from 6% to 11%.

As used herein, the term "elastomer" refers to elastomeric polymers and more particularly to natural and synthetic rubbers such as neoprene or styrene butadiene, with styrene butadiene block copolymers being preferred in this invention. The elastomeric component increases both the high shear viscosity, making processing difficult, and the cost of the adhesive. Thus it is generally preferred that the level of elastomer not exceed 25%.

The compositions of this invention may contain additional ingredients such as anti-oxidants or fillers. These additional ingredients are conventionally used, and are known to those skilled in the art.

The compositions of this invention may be prepared by blending the bitumen, oil, elastomer, silica, and any additional ingredients in various types of mixers at temperatures in the range of about 275° F to 400° F. Preferably, the elastomer and oil are first heated and stirred to provide a homogeneous mix, generally for a period of about 0.5 to 3 hours. The bitumen and any additional materials, e.g. fillers are then added and allowed to become evenly distributed throughout the mix, after which the silica is added. The total composition is then maintained within the above temperature range and stirred until a homogeneous mix is obtained, with a typical mixing time after completion of silica addition generally being less than one half hour. It is preferred that low to moderate shear mixing equipment be used to prepare the compositions.

One measurement of the flow properties of the resulting bituminous adhesive is a test to determine the "sag resistance", or "sag", of the adhesive. The value of the sag resistance indicates whether the adhesive will flow or remain in place when exposed to heat, as on a rooftop. The method of measurement used in this invention is described below:

Sag Resistance Test

1. Prepare a sample that has the dimensions 2"x3"x36 mils and attach to a steel plate.
2. Place the sample in an oven set at 200° F (or at desired test temperature) in a vertical position;
3. Measure sag (flow of the adhesive down the plate) as a function of time over a period of at least 24 hours. The standard test duration is one month.

To prevent flow of the adhesive from the roofing membrane at elevated temperatures, it is necessary that the adhesive have very little sag. Preferably the adhesive as described by this invention will sag less than about 6 inches over a period of 28 days.

This invention is further directed to waterproofing membranes comprising the adhesive compositions of this invention. In one form, the membrane is comprised of an integral, monolithic layer of the adhesive without a support per se, although it may include reinforcing means such as woven or non-woven scrim material or reinforcing fibers partially or fully embedded in the adhesive layer. The adhesive layer preferably has a thickness of at least about 0.01 inches in order to provide satisfactory waterproofing protection. For ease of handling during transport and application, one or both faces of the adhesive membrane may have a covering layer or sheet releasably adhered thereto, with siliconized paper or plastic being a particularly well known and preferred covering. After application to a substrate, the remaining face of the adhesive membrane, which may be exposed by removal of any releasable covering, may be used to adhere or key a covering material, such as a protective layer of finely divided aggregate or a cladding material, e.g., as described in U.S. Patent No. 3,900,102, the disclosure of which is incorporated by reference herein.

Preferably, the membranes of this invention comprise the adhesive layer and a non-removable support layer which is either directly adhered to the adhesive layer, i.e., the support and adhesive layers are contacted and adhered to one another, or indirectly adhered to the adhesive layer, i.e., one or more intermediate layers are positioned between the support and adhesive layers and the membrane is an integral laminate of all of these layers. The support may be a continuous sheet or film of a woven or non-woven scrim or fabric. It may be comprised of inorganic materials, e.g., continuous sheets of a metal foil or a woven or non-woven glass scrim, or organic materials such as natural rubber or synthetic organic polymers. In general, continuous synthetic organic polymer sheets are the preferred support layers. The synthetic polymers which may be used to form these shed include polyethylene, polypropylene or other polyolefins, polyamides, polyesters, polyurethanes, polyvinlychloride, polyvinylfluoride and synthetic rubbers such as polychloroprene or butyl rubber. The polymer sheet may by biaxially oriented or oriented and cross-laminated, e.g. as disclosed in Canadian Patent No. 1,008,738, and, in particular, high density polyethylene sheets of this type are preferred.

In general, it is desired to have optimum weatherability characteristics in the support layer. The support may be rendered opaque, for example, by the incorporation of a material such as carbon black. Protective coatings and films may be applied in the factory or in the field to those surfaces of the support which are to be exposed to the weather. Moreover, the support may be a single sheet of pre-formed film or it may comprise a plurality of layers, not necessarily identical, laminated together to form a unitary structure. The continuous sheet materials are preferred insofar as they may provide a waterproofing and vapor barrier function in addition to that provided by the adhesive layer.

The support layer of the present membranes will generally have a thickness in the range of about 0.001 in. to about 0.05 in., more preferably about 0.002 in. to about 0.02 in. The bitumen-based adhesive layer should be at least 0.01 in. thick and preferably has a thickness in the range of about 0.02 in. to 0.1 in.

The membranes of this invention which comprise a support in addition to the adhesive may also include a releasable covering on that face of the adhesive layer remote from the support, e.g. as disclosed in U.S. Patent No. 3,900,102. As noted above, the siliconized papers and polymer films are generally used.

The membranes of this invention may be applied in accordance with procedures well known in the art. Thus, for example, the adhesive layer is applied against the substrate as the releasable covering is removed more or less simultaneously to expose the face of the layer. For a continuous waterproofing course, the membranes are generally applied in overlapping fashion. In order to provide adhesive to adhesive contact and prevent the formation of channels which allow water flow at the overlap joint, the membranes may be fabricated with the adhesive layer protruding beyond at least one longitudinal edge of the support layer, e.g., as disclosed in U.S. Patent No. 3,900,102.

The membranes of this invention can be prepared by known techniques. Thus, the adhesive may be heated to a temperature which is sufficient to provide desired viscosity and flow for application to the desired substrate (either the support or the releasable covering sheet) and applied thereto in a uniform layer utilizing a suitable coating device. If desired, a reinforcing material may be pressed into the hot adhesive. Any remaining layers are then applied to the exposed adhesive layer, and it may prove desirable to permit the adhesive layer to cool prior to such application, depending on the temperature sensitivity of the remaining layers which are to be applied.

The present invention is futher described by the following Example which is illustrative only and not intended to be of limiting effect. In the following Example, all proportions are in percent by weight unless otherwise specified.

## EXAMPLE 1

A series of modified bituminous adhesive compositions of this invention was prepared, each adhesive comprising styrene butadiene block copolymer, an aromatic oil, bitumen, and calcium carbonate filler. To each composition was added a different level of silica, as shown in Table 1. (All amounts in Table 1 are in parts by weight). The silica used in formulations 2 and 3 was hydrophobic fumed silica having a surface area of 100 m²/g; the silica used in formulations 4 and 5 was precipitated silica having a surface area of 260 m²/g, and the silica used in formulations 6 and 7 was silica fume having a surface area of 22 m²/g.

Each of the formulations of Table 1 was prepared in the following manner. First the oil was heated to a temperature of from 300°F to 400°F, the elastomer was added, and the blend was mixed until the elastomer dissolved (30 to 90 minutes). The filler was then added and mixed until dispersed, and the bitumen was added and mixed for 30 minutes. At this point the silica was added and mixed until well dispersed.

Each of the formulations of Table 1 was then tested using the Sag Test described hereinabove, using a test temperature of 200°F, and results are shown in Table 2. Table 2 also shows the results of viscosity testing, using a Brookfield RVT Viscometer, with spindle number 27, at a test temperature of 300°F; an adhesion test in which a strip of membrane containing the adhesive is adhered to a primed concrete block, aged for 1 day, and tested for 90° peel adhesion at a crosshead speed of 2 inches/minute; and a low temperature flexibility test in which a sample of membrane containing the adhesive is bent around a mandrel to a 180° bend at -25°F and checked for cracking (5 samples of each membrane must be free from cracks for the adhesive to pass). (In Table 2, the sample numbers correspond to the adhesive composition numbers of Table 1.)

The results of Table 2 show a substantial increase in sag resistance with increasing levels of silica. At a level of 24% silica fume, flow is virtually eliminated, and sag resistance is stable over a period of 28 days. Similar results are obtained with fumed silica at a level of 5% and precipitated silica at a level of 8%. The viscosity data of Table 2 demonstrates the thixotropic nature of the adhesives containing silica. Although the "high shear" viscosity (viscosity at 10 rpm) of the adhesives is increased by almost three-fold at preferred levels of silica, the adhesives having these increased viscosities were still easily prepared and used in membranes using conventional mixing and manufacturing equipment. The adhesion and low temperature flexibility data of Table 2 demonstrates that the addition of silica has no significant deleterious effect on either property.

## TABLE 1

| | Adhesive Composition # | | | | | | |
|---|---|---|---|---|---|---|---|
| | 1 | 2 | 3 | 4 | 5 | 6 | 7 |
| Modified Bituminous Adhesive | 100 | 100 | 100 | 100 | 100 | 100 | 100 |
| Fumed Silica | -- | 5.0 | 3.0 | -- | -- | -- | -- |
| Precipitated Silica | -- | -- | -- | 6.0 | 8.0 | -- | -- |
| Condensed Silica Fume | -- | -- | -- | -- | -- | 20 | 24 |

## TABLE 2

| | SAMPLE # | | | | | | |
|---|---|---|---|---|---|---|---|
| Sag Resistance @ 200°F (inches) | 1 | 2 | 3 | 4 | 5 | 6 | 7 |
| 1 day | > 6 | none | 0.22 | > 6 | 0.12 | 0.3 | 0.06 |
| 7 day | > 6 | none | 0.32 | > 6 | 0.31 | 1.8 | 0.06 |
| 14 day | > 6 | none | 0.46 | > 6 | 0.40 | 2.5 | 0.06 |
| 21 day | > 6 | none | 3.6 | > 6 | 0.46 | 2.5 | 0.10 |
| 28 day | > 6 | 0.03 | > 6 | > 6 | 0.47 | 2.6 | 0.19 |
| Brookfield Viscosity RTV @ 300°F (centipoise) | | | | | | | |
| 1 rpm | 6,750 | 69,250 | 27,000 | 18,000 | 63,750 | 35,750 | 62,250 |
| 10 rpm | 5,575 | 15,475 | 9,925 | 8,050 | 15,825 | 11,575 | 16,950 |
| 40°F/1 day Adhesion (lbs/linear inch) | 7.0 | 6.9 | 8.2 | .8 | 9.5 | 5.8 | 3.4 |
| 180° Bend Test @ -25°F | pass | pass | pass | pass | pass | pass | pass |

**Claims**

1. A pressure sensitive adhesive composition comprising:
   a) bitumen;
   b) an oil which is not naturally occurring in said bitumen, and is a naphthenic oil, paraffinic oil or aromatic oil;
   c) an elastomer; and
   d) silica.

2. A composition according to claim 1 comprising from 1 to 30 weight percent of silica.

3. A composition according to claim 1 or 2 comprising less than about 25 weight percent of said elastomer.

4. A composition according to claim 1, 2 or 3 wherein said oil is an aromatic oil.

5. A composition according to any one of the preceding claims wherein said elastomer is a styrene butadiene block copolymer.

6. A composition according to any one of the preceding claims wherein said silica has a surface area of from 10 to 700 m²/g.

7. A composition according to any one of the preceding claims comprising from 15 to 30 weight percent of condensed silica fume, from 1 to 10 weight percent of fumed silica or from 4 to 15 weight percent of precipitated silica.

8. A composition according to any one of the preceding claims further comprising, as filler, calcium carbonate in an amount of up to 35 weight percent.

9. A composition according to any one of the preceding claims having a sag of less than about 155mm (six inches) after 28 days at 93°C (200°F), measured by the standard Sag Resistance Test described hereinabove.

10. A composition according to any one of the preceding claims comprising from 32 to 52 weight percent of bitumen, from 9 to 21 weight percent of elastomer, from 21 to 37 weight percent of oil and from 3 to 24 weight percent of silica.

11. A composition according to claim 10 comprising from 22 to 27 weight percent condensed silica fume or from 3 to 7 weight percent fumed silica.

12. A waterproofing membrane comprising waterproofing layer of a pressure sensitive adhesive composition as claimed in ayn yone of the preceding claims.

13. A membrane according to claim 12 further comprising a support layer directly or indirectly adhered to said pressure sensitive adhesive layer.

14. A membrane according to claim 13 wherein said support layer is a woven or non-woven scrim or a continuous sheet of a synthetic organic polymer.

15. A membrane according to claim 12, 13 or 14 wherein said pressure sensitive adhesive layer has a thickness of at least 0.25mm (0.01 inches).